**Europäisches Patentamt**

**European Patent Office**

**Office européen des brevets**

(11) Veröffentlichungsnummer: **0 177 875**
**B1**

(12) # EUROPÄISCHE PATENTSCHRIFT

(45) Veröffentlichungstag der Patentschrift:
26.07.89

(51) Int. Cl.⁴: **C 08 L 69/00, C 08 L 51/04**

(21) Anmeldenummer: 85112392.7

(22) Anmeldetag: 01.10.85

(54) Selbstverlöschende thermoplastische Formmasse.

(30) Priorität: 06.10.84 DE 3436815

(43) Veröffentlichungstag der Anmeldung:
16.04.86 Patentblatt 86/16

(45) Bekanntmachung des Hinweises auf die Patenterteilung:
26.07.89 Patentblatt 89/30

(84) Benannte Vertragsstaaten:
BE DE FR GB IT NL

(56) Entgegenhaltungen:
EP-A- 0 064 692
EP-A- 0 111 260
EP-A- 0 132 339
US-A- 4 264 487

(73) Patentinhaber: BASF Aktiengesellschaft,
Carl-Bosch-Strasse 38, D-6700 Ludwigshafen (DE)

(72) Erfinder: Muench, Volker, Dr., Luitpoldstrasse 114,
D-6700 Ludwigshafen (DE)
Erfinder: Mitulla, Konrad, Dr., Schwalbenweg 31,
D-6700 Ludwigshafen (DE)
Erfinder: Echte, Adolf, Dr., Leuschnerstrasse 42,
D-6700 Ludwigshafen (DE)
Erfinder: Hambrecht, Juergen, Dr., Werderstrasse 30,
D-6900 Heidelberg (DE)

## Beschreibung

Die Erfindung betrifft eine selbstverlöschende thermoplastische Formmasse auf der Grundlage von Styrol- und Acrylnitril enthaltenden, mit Acrylester schlagzäh modifizierten Polymerisaten (ASA), Polycarbonaten und Halogen enthaltenden Flammschutzmitteln.

Zum Stand der Tecnik nennen wir:
(1) DE-PS 1 170 141
(2) DE-PS 1 810 993
(3) DE-AS 2 037 419
(4) DE-PS 2 259 564
(5) DE-OS 3 149 458
(6) DE-OS 3 210 284
(7) DE-OS 3 245 295 6 und
(8) EP-A 164 519 veröffentlicht 24.10.1985

Mischungen von Styrol- und Acrylnitril enthaltenden schlagzähen Polymerisaten mit Polycarbonaten sind in (1) und (2) beschrieben. Diese bekannten Formmassen besitzen im allgemeinen zufriedenstellende Eigenschaften. Häufig wird aber eine höhere Zähigkeit, eine höhere Wärmeformbeständigkeit, vor allem aber eine verbesserte Witterungsbeständigkeit angestrebt. In (3), (4) und (6) werden deshalb zur Verbesserung der Beständigkeit gegen Licht und Wärme Formmassen beschrieben, die aus Polycarbonaten und ASA-Polymerisaten aufgebaut sind. Die 2stufige Pfropfung von ASA-Polymerisaten ist in (5) beschrieben. In (7) und (8) schliesslich sind Abmischungen aus Polycarbonaten und ASA beschrieben, wobei die Pfropfhülle des Mischpolymerisates 2stufig (7) bzw. 3stufig (8) aufgebaut sind. Häufig genügt bei diesen Formmassen die Zähigkeit und Wärmeformbeständigkeit nicht den ständig steigenden Ansprüchen, insbesondere aber ist die Verarbeitbarkeit und deren multiaxiale Schlagzähigkeit völlig unbefriedigend. Die Formmassen nach (1) bis (8) besitzen ferner keine flammhemmenden, selbstverlöschenden Eigenschaften.

Die Flammfestausrüstung thermoplastischer Kunststoffe mit Halogen enthaltenden organischen Verbindungen zusammen mit Metall oder Nichtmetall enthaltenden Verbindungen (Synergisten) ist an sich bekannt und z.B. in Vogel, «Flammfestmachen von Kunststoffen», Hüthig-Verlag (1966), Seiten 94 bis 102; Troitzsch, «Brandverhalten von Kunststoffen», Hanser-Verlag (1982), Seiten 1 bis 63 und Hirschler, «Developments in Polymer Stabilization», Band 5, Editor G. Scott. Applied Science Publishers, London (1982), Seiten 107 bis 151, beschrieben. Es ist ferner bekannt, dass auch Vo/P

Blends bestehend aus Poly(carbonaten) und schlagzäh modifizierten Styrolcopolymeren in dieser Weise flammfest ausgerüstet werden können (vgl. DE-OS 3 002 662). Die Erfahrung lehrt jedoch, dass die üblicherweise eingesetzten Blends gemäss (1) bis (8) zwar flammhemmend ausgerüstet werden können, dass dann aber die mechanischen und thermischen Eigenschaften der Blends darunter in nicht tolerierbarem Masse leiden.

Es bestand daher die Aufgabe, Formmassen vorzuschlagen, die ausser einem guten mechanischen und thermischen Eigenschaftsprofil auch noch selbstverlöschende Eigenschaften besitzen.

Diese Aufgabe wird durch die im Patentanspruch 1 beschriebene Formmasse gelöst.

Die Erfindung betrifft daher eine selbstverlöschende thermoplastische Formmasse, enthaltend

A) 10 bis 90 Gew.-Teile, mindestens eines Polycarbonates
und

B) 90 bis 10 Gew.-Teile, mindestens eines Pfropfmischpolymerisates, das gebildet wird aus
$b_1$) mindestens einem Elastomeren (Kautschuk), das 10 bis 80 Gew.%, bezogen auf B), ausmacht und das aufgebaut ist aus:
$b_1a_1$) 50 bis 99,9 Gew.%, bezogen auf $b_1$), mindestens eines Alkylacrylats mit 1 bis 8 Kohlenstoffatomen im Alkylrest
$b_1a_2$) 0 bis 50 Gew.%, bezogen auf $b_1$), mindestens eines copolymerisierbaren ungesättigten Monomeren
und
$b_1a_3$) 0,1 bis 5 Gew.%, bezogen auf $b_1$), eines copolymerisierbaren polyfunktionellen, vernetzenden Monomeren
und
$b_2$) einer 3stufig aufgebauten Pfropfhülle auf dieses Elastomere, die 90 bis 20 Gew.%, bezogen auf B), ausmacht,
und die einpolymerisiert enthält
als Pfropfmonomere der ersten Stufe
$b_2a_1$) 5 bis 40 Gew.%, bezogen auf $b_2$), mindestens eines monoethylenisch ungesättigten aromatischen Kohlenwasserstoffs mit bis zu 12 Kohlenstoffatomen,
als Pfropfmonomere der zweiten Stufe
$b_2a_2$) 15 bis 50 Gew.%, bezogen auf $b_2$), eines Gemisches aus mindestens einem monoethylenisch ungesättigten aromatischen Kohlenwasserstoff mit bis zu 12 Kohlenstoffatomen und – mindestens einem damit copolymerisierbaren ethylenisch ungesättigten Monomeren im Gewichtsverhältnis von 90:10 bis 60:40,
und als Pfropfmonomere der dritten Stufe
$b_2a_3$) 10 bis 85 Gew.%, bezogen auf $b_2$), eines Alkylmethacrylates oder eines Alkylacrylates mit 1 bis 8 C-Atomen im Alkylrest oder deren Mischungen, wobei das aus dem Elastomeren $b_1$) und der Pfropfhülle $b_2$) gebildete Propfmischpolymerisat eine mittlere Teilchengrösse von 200 bis 700 nm ($d_{50}$-Wert der integralen Masseverteilung aufweist,
enthaltend ferner
C mindestens ein Flammschutzmittel, dadurch gekennzeichnet, dass die Formmasse, jeweils bezogen auf 100 Gew.-Teile A+B, 1 bis 50 Gew.-Teile einer Halogen enthaltenden organischen Verbindung als Flammschutzmittel (Komponente C) und
D 0,1 bis 20 Gew.-Teile einer Metall oder Nichtmetall enthaltenden Verbindung (Synergist) aufweist.

Nachstehend wird der Aufbau der Formmasse aus den Komponenten A) bis D) beschrieben:

Die erfindungsgemässe Formmasse enthält die Komponenten A) und B) jeweils in einem Anteil von 10 bis 90 Gew.-Teile, vorzugsweise von 30 bis 90 Gew.-Teile, jeweils bezogen auf die Formmasse aus A+B, wobei sich beide Komponenten zu 100 ergänzen.

Die Komponente B) der Formmasse enthält mindestens ein Pfropfmischpolymerisat, das aus mindestens einem Elastomeren $b_1$) in einem Anteil von 10 bis 80 Gew.-Teile, vorzugsweise von 30 bis 70 Gew.-Teile und insbesondere von 40 bis 65 Gew.-Teile, jeweils bezogen auf B), aufgebaut ist.

Ferner enthält das Pfropfmischpolymerisat mindestens eine Pfropfhülle $b_2$) in einem Anteil von 90 bis 20 Gew.%, vorzugsweise von 70 bis 30 Gew.% und insbesondere von 60 bis 35 Gew.%, jeweils bezogen auf B). Vorzugsweise besteht das Pfropfmischpolymerisat aus $b_1$) und $b_2$) ( = 100).

Bezogen auf 100 Gew.-Teile A) + B) enthält die erfindungsgemässe Formmasse desweiteren 1 bis 50 Gew.-Teile, insbesondere 2 bis 30 Gew.-Teile, vorzugsweise 3 bis 25 Gew.-Teile, mindestens einer Halogen enthaltenden organischen Verbindung C als Flammschutzmittel und ferner 0,5 bis 20 Gew.-Teile, insbesondere 1 bis 15 Gew.-Teile und vorzugsweise 1,2 bis 12 Gew.-Teile, mindestens einer Metall oder Nichtmetall enthaltenden Verbindung D als Synergisten. Die erfindungsgemässe Formmasse besteht vorzugsweise aus den genannten 4 Komponenten. Sie kann jedoch, dies wird insbesondere bei der Verarbeitung der Fall sein, übliche Zusatzstoffe in üblichen Mengen aufweisen.

Die für die Herstellung der erfindungsgemässen Formmassen verwendeten Komponenten A) bis D) sind im Prinzip bekannt. Neu und erfinderisch ist, dass durch die Kombination eines dreifach gepfropften Acrylatkautschuks (als Schlagzähmodifier für die Komponente B) und Flammschutzmittel (Komponente C) sowie Synergisten (Komponente D) Formmassen mit einem ausgeglichenen Eigenschaftsprofil erhalten werden, während Formmassen mit in üblicher Weise schlagzäh modifizierter Komponente B) bei der Zugabe der Komponenten C) und D) zwar die Eigenschaft der Selbstverlöschung aufweisen, dass aber das thermische und mechanische Eigenschaftsprofil in überproportionaler Weise geschädigt wird.

Komponente A

Unter Polycarbonaten A) im Sinne der erfindungsgemässen Formmasse sollen Polycarbonate auf der Basis von Homopolycarbonaten und Copolycarbonaten verstanden werden. Als Bisphenole kommen dabei beispielsweise in Frage: Dihydroxydiphenyle, Bis-(hydroxyphenyl)alkane, Bis-(hydroxyphenyl)ether. Es können aber auch alle anderen, für die Herstellung von Polycarbonaten geeigneten Bisphenole eingesetzt werden, wie sie u.a. in der Monographie H. Schnell, Chemistry and Physiks auf Polycarbonates, Intersience Publishers, New York, 1964, in der US-PS 2 999 835 und in der DE-OS 22 48 817 beschrieben sind. Besonders bevorzugt sind Polycarbonate auf der Basis von 2,2-Bis-(4-hydroxyphenyl)propan. Die Synthese der Polycarbonate wird beispielsweise in der US-PS 2 999 835 und der GB-PS 772 627 beschrieben. Die Komponente A weist relative Viskositäten $_{spec}/c$ im Bereich von 1,1 bis 1,5 [ml/g] auf, entsprechend mittleren Molgewichten $M_n$ im Bereich von 25000 bis 200000.

Komponente B

Die Komponente B) stellt mindestens ein Pfropfmischpolymerisat (Weichkomponente) dar; es ist aus insgesamt 2 Teilen aufgebaut bzw. besteht aus diesen.
Diese sind:

$b_1$) ein Elastomeres (Kautschuk), das in einem Anteil von 10 bis 80 Gew.%, vorzugsweise von 30 bis 70 Gew.% und insbesondere von 40 bis 65 Gew.% jeweils bezogen auf B) vorhanden ist und eine Einfriertemperatur von weniger als 0°C, vorzugsweise von weniger als −30°C, aufweist
und
$b_2$) eine durch sukzessive Polymerisation in 3 Verfahrensschritten auf das Elastomere gepfropfte Hülle, die 20 bis 90 Gew.%, vorzugsweise 30 bis 70 Gew.%, insbesondere 60 bis 35 Gew.%, jeweils bezogen auf B), ausmacht.

Als Monomere für die Herstellung des Elastomeren kommen in Betracht (Summe $b_1a_1$) + $b_1a_2$) + $b_1a_3$) = 100):
$b_1a_1$) 50 bis 99,9 Gew.%, vorzugsweise 70 bis 99 Gew.%, insbesondere 95 bis 99,9 Gew.%, bezogen auf $b_1$), mindestens eines Alkylacrylates mit 1 bis 8 C-Atomen im Alkylrest, vorzugsweise werden n-Butylacrylat und/oder 2-Ethyl-hexylacrylat einpolymerisiert.
$b_1a_2$) Gegebenenfalls kann das elastomere Polymerisat $b_1$) auch noch bis zu 50, insbesondere 10 bis 20 Gew.%, jeweils bezogen auf $b_1$), eines weiteren copolymerisierbaren Monomeren, wie Butadien, Isopren, Styrol, Acrylnitril, oder Vinylmethylether oder Mischungen davon einpolymerisiert enthalten.
$b_1a_3$) Um vernetzte Acrylsäureester-Polymerisate zu erhalten, wird die Polymerisation der Acrylsäureester in Gegenwart von 0,1 bis 5 Gew.%, vorzugsweise von 1 bis 4 Gew.%, bezogen auf die bei der Herstellung der Pfropfgrundlage eingesetzten gesamten Monomeren, eines copolymerisierbaren, polyfunktionellen, vorzugsweise bifunktionellen, die Vernetzung bewirkenden Monomeren $b_1a_3$) durchgeführt. Als solche bi- oder polyfunktionellen Vernetzungs-Monomeren $b_1a_3$) eignen sich Monomere, die vorzugsweise zwei, gegebenenfalls auch mehr, zur Copolymerisation befähigte ethylenische Doppelbindungen enthalten, die nicht in den 1,3-Stellungen konjugiert sind.

Geeignete Vernetzungsmonomere sind beispielsweise Divinylbenzol, Diallylmaleat, Diallylfumarat oder Diallylphthalat. Als besonders günstiges Vernetzungsmonomeres hat sich der Acrylsäureester des Tricyclodecenylalkohols erwiesen (vgl. DE-PS 1 260 135).

Besonders bevorzugt werden Elastomere $b_1$), die nur die Monomeren $b_1a_1$) und $b_1a_3$) in den vorstehend genannten Bereichen einpolymerisiert enthalten.

Das Elastomere $b_1$) stellt somit vorzugsweise ein vernetztes Homopolymerisat oder ein Copolymerisat von Acrlyestern dar bzw. es besteht daraus.

Die Herstellung der einzusetzenden Weichkomponente $(b_1+b_2)$ ist an sich bekannt und kann beispielsweise nach der in der DE-PS 1 260 135 beschriebenen Methode erfolgen.

Herstellung des Elastomeren $b_1$)

Das Elastomer, die Pfropfgrundlage $b_1$) wird hergestellt, indem der oder die Acrylsäureester $(b_1a_2)$ und das polyfunktionelle, die Vernetzung bewirkende Monomere $b_1a_3$) gegebenenfalls zusammen mit den weiteren Comonomeren $b_1a_2$) in wässriger Emulsion in an sich bekannter Weise bei Temperaturen von 20 bis 100°C, vorzugsweise von 50 bis 80°C polymerisiert werden. Es können die üblichen Emulgatoren, wie Alkalisalze von Alkyl- oder Alkylarylsulfonsäuren, Alkylsulfate, Fettalkoholsulfonate, Salze höherer Fettsäuren mit 10 bis 30 Kohlenstoffatomen oder Harzseifen, verwendet werden. Vorzugsweise nimmt man die Natriumsalze von Alkylsulfonaten oder Fettsäuren mit 10 bis 18 Kohlenstoffatomen. Es ist günstig, die Emulgatoren in Mengen von 0,5 bis 5 Gew.%, insbesondere von 1 bis 2 Gew.%, bezogen auf die bei der Herstellung der Pfropfgrundlage $(b_1)$ eingesetzten Monomeren, einzusetzen. Im allgemeinen wird bei einem Wasser- zu Monomeren-Verhältnis von 2:1 bis 0,7:1 gearbeitet. Als Polymerisationsinitiatoren dienen insbesondere die gebräuchlichen Persulfate, wie Kalimpersulfat, es können jedoch auch Redox-Systeme zum Einsatz gelangen. Die Initiatoren werden im allgemeinen in Mengen von 0,1 bis 1 Gew.%, bezogen auf die bei der Herstellung der Pfropfgrundlage $(b_1)$ eingesetzten Monomeren, eingesetzt. Als weitere Polymerisationshilfsstoffe können die üblichen Puffersubstanzen, durch welche pH-Werte von vorzugsweise 6 bis 9 eingestellt werden – z.B. Natriumbicarbonat und Natriumpyrophosphat –, sowie 0 bis 3 Gew.% eines Molekulargewichtsreglers – wie Mercaptane, Terpinole oder dimeres $\alpha$-Methylstyrol – bei der Polymerisation verwendet werden.

Die genauen Polymerisationsbedingungen, insbesondere Art, Dosierung und Menge des Emulgators, werden innerhalb der oben angegebenen Bereiche im einzelnen so bestimmt, dass der erhaltene Latex des vernetzten Acrylsäureester-Polymerisats einen $d_{50}$-Wert im Bereich von etwa 200 bis 700 nm, vorzugsweise im Bereich von 250 bis 600 nm besitzt. Die Teilchengrössen-Verteilung des Latex soll dabei vorzugsweise eng sein. Der Quotient $Q = (d_{90} - d_{10})/d_{50}$

soll kleiner als 0,5, vorzugsweise kleiner als 0,35, sein.

Herstellung der Pfropfhülle $b_2$)

Die Pfropfhülle, Komponente $b_2$) wird in insgesamt 3 sukzessiven Verfahrensstufen, in denen in der genannten Reihenfolge die Monomeren $b_2a_1$), dann $b_2a_2$) und schliesslich $b_2a_3$) an das Elastomere an- oder aufpolymerisiert werden, hergestellt. Die Summe der einpolymerisierten Monomeren $b_2a_1$) + $b_2a_2$) + $b_2a_3$) beträgt 100. Die 1. Stufe macht 5 bis 40 Gew.%, vorzugsweise 10 bis 25 Gew.%, bezogen auf $b_2$), aus. Zu ihrer Herstellung werden nur ethylenisch-ungesättigte aromatische Kohlenwasserstoffe mit bis zu 12 C-Atomen $b_2a_1$) verwendet.

Die 2. Stufe der Pfropfhülle macht 10 bis 50 Gew.%, insbesondere 20 bis 45 Gew.%, jeweils bezogen auf $b_2$), aus. Zu ihrer Herstellung werden Mischungen aus den genannten aromatischen Kohlenwasserstoffen $b_2a_1$) und ethylenisch ungesättigten Monomeren $b_2a_2$) im Gewichtsverhältnis $b_2a_1$)/$b_2a_2$) von 90:10 bis 60:40, insbesondere von 80:20 bis 70:20 angewendet.

Die dritte Stufe der Pfropfhülle macht 10 bis 85 Gew.%, vorzugsweise 25 bis 70 Gew.%, jeweils bezogen auf $b_2$), aus. Zu ihrer Herstellung wird mindestens 1 Monomeres $b_2a_3$) aus der Gruppe der Alkylmethacrylate oder der Alkylacrylate mit jeweils 1 bis 8 C-Atomen im Alkylrest einpolymerisiert.

Zur Herstellung der Pfropfhülle $b_2$) und damit der Weichkomponente $(b_1+b_2)$ wird in Gegenwart des Latex des vernetzten Acrylester-Polymerisats $b_1$) zuerst mindestens ein vinylaromatisches Monomeres $b_2a_1$) mit bis zu 12 Kohlenstoffatomen (ein-) bzw. aufpolymerisiert. Beispiele für solche Monomere sind Styrol, $\alpha$-Methylstyrol und kernalkylierte Styrole, wie p-Methylstyrol und tert.-Butylstyrol. Besonders bevorzugt werden Styrol, $\alpha$-Methylstyrol und p-Methylstyrol eingesetzt. Es ist vorteilhaft, diese Pfropfmischpolymerisation von z.B. Styrol $b_2a_1$) auf das als Pfropfgrundlage dienende vernetzte Polyacrylsäureester-Polymerisat $b_1$) in wässriger Emulsion unter den üblichen, vorstehend aufgeführten Bedingungen bis zum praktisch vollständigen Verbrauch der Monomeren $b_2a_1$) durchzuführen. Die Pfropfmischpolymerisation kann zweckmässig im gleichen System erfolgen wie die Emulsionspolymerisation zur Herstellung der Pfropfgrundlage $b_1$), wobei, falls notwendig, weiterer Emulgator und Initiator zugegeben werden kann. Das aufzupfropfende vinylaromatische Monomere, insbesondere Styrol kann dem Reaktionsgemisch auf einmal, absatzweise in mehreren Stufen oder vorzugsweise kontinuierlich während der Polymerisation zugegeben werden. Die Pfropfmischpolymerisation des Styrols in Gegenwart des vernetzten Acrylsäureester-Polymerisats wird so geführt, dass ein Pfropfgrad von 5 bis 40, vorzugsweise von 10 bis 25, im Pfropfmischpolymerisat $(b_1+b_2a_1)$ resultiert.

In einer zweiten Verfahrensstufe wird dann die Pfropfmischpolymerisation mit einem Monomerengemisch aus einem vinylaromatischen Monomeren und einem copolymerisierbaren polaren Monomeren $b_2a_2$) wieder bis zum praktisch vollständigen Umsatz durchgeführt. Dabei werden bevorzugt die bereits bei der ersten Pfropfstufe eingesetzten Monomeren, insbesondere Styrol, α-Methylstyrol und p-Methylstyrol verwendet. Beispiele für copolymerisierbare, ethylenisch ungesättigte Monomere sind Acrylnitril, Acrylamid und/oder Vinylmethylether. Besonders bevorzugt wird Acrylnitril. Als besonders bevorzugte Monomeren-Gemische werden vor allem Styrol und Acrylnitril, α-Methylstyrol und/oder Styrol und Acrylnitril eingesetzt. Auch der zweite Schritt der Pfropfmischpolymerisation wird zweckmässigerweise im gleichen Emulsions-System durchgeführt, dabei kann, falls notwendig, weiterer Emulgator und Initiator zugegeben werden. Das aufzupfropfende Monomeren-Gemisch, bevorzugt wird eine Mischung aus Styrol und Acrylnitril, kann dem Reaktionsgemisch auf einmal, absatzweise in mehreren Stufen oder vorzugsweise kontinuierlich während der Polymerisation zugegeben werden. Die Pfropfmischpolymerisation des Gemischs von Styrol und Acrylnitril in Gegenwart des vernetzten Acrylsäureester-Polymerisats wird so ausgeführt, dass ein Pfropfgrad von 15 bis 50, vorzugsweise von 20 bis 45, im Pfropfmischpolymerisat $(b_1 + b_2a_1 + b_2a_2)$ resultiert.

In der 3. Verfahrensstufe werden, vorzugsweise mit dem Emulgator- und Initiatorsystem, das in der vorangegangenen Verfahrensstufe verwendet wurde, die Monomeren $b_2a_3$) ein- bzw. aufpolymerisiert. Vorzugsweise werden die Ester der Methacrylsäure, wie Methylmethacrylat, Ethylmethacrylat oder t-Butylmethacrylat angewendet. Besonders bevorzugt ist das Methylmethacrylat.

Die Verfahrensmassnahmen entsprechen im allgemeinen den Bedingungen der 1. und 2. Verfahrensstufe mit dem Unterschied, dass die Pfropfgrade im Bereich von 5 bis 40, vorzugsweise 10 bis 30, eingestellt werden.

Unter Pfropfgrad im Sinne der vorliegenden Erfindung ist dabei das Verhältnis der Pfropfmonomeren zu dem Pfropfmischpolymerisat, d.h.

$$\frac{b_2}{b_1 + b_2} \cdot 100 \text{ zu verstehen,}$$

d.h. z.B. für die 1. Stufe $\dfrac{b_2a_1}{b_1 + b_2a_1} \cdot 100$

für die 2. Stufe $\dfrac{b_2a_2}{b_1 + b_2a_1 + b_2a_2} \cdot 100$ usw.

Anzumerken ist, dass der Pfropfgrad insbesondere bei schichtweisem Aufbau nur während der

Herstellung des Pfropfmischpolymerisates bestimmt (eingestellt) werden kann.

Die Pfropfmischpolymerisate $(b_1 + b_2)$ weisen mittlere Teilchengrössen von 200 bis 700 nm ($d_{50}$-Wert) auf. Die Bedingungen bei der Herstellung des Elastomeren $b_1$) sind daher so zu wählen, dass Teilchengrössen in diesem Bereich resultieren. Massnahmen hierzu sind bekannt und z.B. in der DE-PS 1 260 135 und der DE-OS 2 826 925 sowie in Journal of Applied Polymere Science, Vol. 9 (1965), S. 2929 bis 2938 beschrieben. Die Teilchenvergrösserung, des Latex des Elastomeren kann z.B. mittels Agglomeration bewerkstelligt werden.

Zu der Weichkomponente B zählen auch die bei der Pfropfmischpolymerisation zur Herstellung der Komponente $b_2$) entstehenden freien, nicht gepfropften $b_2a_1$), $b_2a_2$)- und $b_2a_3$)-enthaltenden Homo- und Copolymerisate. Je nach den bei der Pfropfmischpolymerisation für die Herstellung des Pfropfmischpolymerisats $(b_1 + b_2)$ gewählten Bedingungen kann es möglich sein, dass bei der Pfropfmischpolymerisation ein geringer Anteil an solchen (Co)polymerisaten gebildet wird. Der erfindungsgemässen Formmasse können jedoch für bestimmte Zwecke, zusätzlich zu den Komponenten A + B, Copolymerisate der Art, wie sie bei der Pfropfmischpolymerisation entstehen, zugegeben werden. Das heisst, die Verdünnung der Hartmatrix A der erfindungsgemässen Formmasse kann der Fachmann mit geeigneten verträglichen Copolymerisaten ohne erfinderisches Zutun vornehmen.

Komponente C

Bei der Komponente (C) der erfindungsgemässen Formmasse handelt es sich um Halogen, vorzugsweise Brom, enthaltende nieder- und hochmolekulare aromatische Verbindungen, ausgewählt aus den Klassen der Aryle, Arylether, Arylalkylether, Arylamine, Arylimide, Arylanhydride, Phenole, Arylalkylimide und Arylsiloxane. Die folgende Zusammenstellung zeigt charakteristische Beispiele; sie beinhaltet keine Einschränkung:

Aryle: Hexabrombenzol, Bromiertes oligomeres Styrol (BOS), Pentabrommethylbenzol;
Arylether: Dekabromdiphenylether, Oktabromdiphenylether, Poly(2,6-dibrom-1,4-phenylen)ether;
Arylalkylether: Bis(2,4,6-tribromphenoxi)ethan, Bis(pentabromphenoxi)ethan, Poly(tetrabrombisphenol-A-glycidyl)-ether, Poly(tetrabromhydrochinon-1,2-ethyliden)ether;
Arylamine: Tris(2,4-dibromphenyl)amin, Bis(pentabromphenyl)amin; Tribromanilin;
Arylanhydride: Tetrabromphthalsäureanhydrid;
Arylimide: Tetrabromphthalsäureimid;
Arylalkylimide: Ethylen-bis(tetrabromphthalimid);
Phenole: Tetrabromisphenol-A;
Arylsiloxane: Tetrakis(2,4,6-tribromphenyl)siloxan;

Besonders bevorzugt eingesetzt werden: Octabromdiphenylether, DE 79® von Great Lakes,

Poly(2,6-dibrom-1,4-phenylen)ether, PO 64 P® von Great Lakes, Poly(tetrabrombisphenol-A-glycidyl)ether, F 2400® von Makhteshim Molgewicht 40.000),

Ethylenbis(tetrabromphthalimid), Saytex BT 93® von Saytech und Bis(2,4,6-tribromphenoxi)ethan, Firemaster FF 680® von Great Lakes.

Die Flammschutzmittel werden in Mengen von 1 bis 50 Gew.-Teilen, insbesondere 2 bis 30 Gew.-Teile, vorzugsweise 3 bis 25 Gew.-Teile, jeweils bezogen auf 100 Gew.-Teile A+B, eingesetzt.

Komponente D

Als Synergisten für die Halogen enthaltenden Flammschutzmittel in den erfindungsgemässen Formmassen kommen vor allem Metallverbindungen wie $As_2O_3$, $Sb_2O_3$, $Bi_2O_3$, $SnO_2$, $Fe_2O_3$, Ferrocen, $Al_2O_3$, ZnO und deren Gemische sowie Nichtmetallverbindungen wie Hypophosphite und Borate in Frage, und zwar in Mengen von 0,1 bis 20 Gew.-Teilen, vorzugsweise 1 bis 10 Gew.-Teilen, jeweils bezogen auf A+B. Bevorzugt eingesetzt wird $Sb_2O_3$ ($D_1$).

Komponente E

Die erfindungsgemässe Formmasse kann ferner übliche Zusatzstoffe enthalten (Komponente E). Als Zusatzstoffe kommen bekannte und bewährte Stabilisatoren, wie sterisch gehinderte Phenole und organische Phosphite in Betracht, die in üblichen Mengen von jeweils 0,01 bis 0,5 Gew.-Teilen, bezogen auf 100 Gew.-Teile A+B, angewendet werden.

Ferner können Schwefel und/oder Schwefel enthaltende Antioxidantien wie Dithiocarbamatkomplexe, Xanthogensäuresalze, Thiazole und Zinksalze von Mercaptobenzimidazolen in üblichen Mengen von jeweils 0,01 bis 0,5 Gew.-Teilen, bezogen auf 100 Gew.-Teile A+B, eingesetzt werden.

Ferner sind anwendbar Füllstoffe, Farbpigmente, Gleitmittel, Weichmacher, Antistatika oder Treibmittel, weitere metallfreie Synergisten, wie Triphenylphosphat, Triphenylphosphinoxid in üblichen, dem Fachmann bekannten Mengen.

Besonders bevorzugt eingesetzt werden Pthalsäureester, wie Pluriol PE 3100® und Tris(nonylphenyl)phosphit (TNPP).

Herstellung der erfindungsgemässen Formmasse

Das Mischen der Komponenten A), B), C), D) und gegebenenfalls E) der erfindungsgemässen Formmasse kann nach allen bekannten Methoden erfolgen. Vorzugsweise geschieht jedoch das Mischen der Komponenten A), B), C), D) und gegebenenfalls E) durch gemeinsames Extrudieren, Kneten oder Verwalzen der Komponenten, wobei die Komponenten notwendigenfalls zuvor aus der bei der Polymerisation erhaltenen Lösung oder aus der wässrigen Dispersion isoliert worden sind. Die in wässriger Dispersion erhaltenen Produkte der Pfropfmischpolymerisation [Komponente B)] können aber auch teilweise entwässert oder direkt als Dispersion mit dem Polycarbonat A) und den Komponenten C), D) und gegebenenfalls E) vermischt werden, wobei dann während des Vermischens die vollständige Trocknung des Pfropfmischpolymerisats erfolgt.

Eine bevorzugte Herstellung der erfindungsgemässen Formmasse erfolgt z.B. dadurch, dass eine Schmelze des Polycarbonats [Komponente A)] mit dem Pfropfmischpolymerisat $b_1+b_2$ bei Temperaturen über 200°C intensiv vermischt wird. Sie kann auch dadurch erfolgen, dass man eine Schmelze der Polymerisate A) mit einem gefällten Pfropfmischpolymerisat $b_1+b_2$, das einen Restwassergehalt von 10 bis 40 Gew.% aufweist, bei Temperaturen über 180°C intensiv vermischt, oder dass man die Schmelze mit einer Dispersion des Pfropfkautschuks $b_{1+b2}$, die ein Feststoffgehalt von 40 bis 70 Gew.% aufweist, bei Temperaturen über 180°C intensiv vermischt und wobei jeweils anschliessend die Komponenten C), D) und gegebenenfalls E) beigegeben werden.

Die erfindungsgemässe Formmasse kann nach den bekannten Verfahren der Thermoplastverarbeitung bearbeitet werden, also z.B. durch Extrudieren, Spritzgiessen, Kalandrieren, Hohlkörperblasen, Pressen oder Sintern; besonders bevorzugt werden aus den nach dem erfindungsgemässen Verfahren hergestellten Formmassen Formteile durch Spritzgiessen für den Automobilbau hergestellt.

Es hat sich überraschenderweise gezeigt, dass die erfindungsgemässe Formmasse zusätzlich zu guten Verarbeitungseigenschaften ausgezeichnete Kerbschlagzähigkeiten und eine gute Festigkeit bei der multiaxialen Schlagbeanspruchung (Fallrohrtest), eine hohe Wärmeformbeständigkeit und selbstverlöschende Eigenschaften aufweist.

Es zeigt sich auch, dass die Schlagzähigkeit nach Bewitterung auf einem hohen Endniveau verbleibt und die Formmassen danach trotz Bewitterungsschädigung keinen Bruch aufweisen.

Die in der vorliegenden Anmeldung beschriebenen Parameter wurden wie folgt bestimmt:

1. Die mittlere Teilchengrösse und die Teilchengrössenverteilung wurde aus der integralen Massenverteilung bestimmt. Bei den mittleren Teilchengrössen handelt es sich in allen Fällen um das Gewichtsmittel der Teilchengrössen, wie sie mittels einer analytischen Ultrazentrifuge entsprechend der Methode von W. Scholtan und H. Lange, Kolloid-Z, und Z.-Polymere 250 (1972), Seiten 82 bis 796, bestimmt wurden. Die Ultrazentrifugenmessung liefert die integrale Massenverteilung des Teilchendurchmessers einer Probe. Hieraus lässt sich entnehmen, wieviel Gewichtsprozent der Teilchen einen Durchmesser gleich oder kleiner einer bestimmten Grösse haben. Der mittlere Teilchendurchmesser, der auch als $d_{50}$-Wert der integralen Massenverteilung bezeichnet wird, ist dabei als der Teilchendurchmesser definiert, bei dem 50 Gew.% der Teilchen einen kleineren Durchmesser haben als der Durchmesser, der dem $d_{50}$-Wert entspricht.

Ebenso haben dann 50 Gew.% der Teilchen einen grösseren Durchmesser als der $d_{50}$-Wert. Zur Charakterisierung der Breite der Teilchengrössenverteilung der Kautschukteilchen werden neben dem $d_{50}$-Wert (mittlerer Teilchendurchmesser), die sich aus der integralen Massenverteilung ergebenden $d_{10}$- und $d_{90}$-Werte herangezogen. Der $d_{10}$-bzw. $d_{90}$-Wert der integralen Massenverteilung ist dabei entsprechend dem $d_{50}$-Werte definiert mit dem Unterschied, dass sie auf 10 bzw. 90 Gew.% der Teilchen bezogen sind. Der Quotient

$$\frac{d_{90} - d_{10}}{d_{50}} = Q$$

stellt ein Mass für die Verteilungsbreite der Teilchengrösse dar.

2. Die Kerbschlagzähigkeit in $[kJ/m_2]$ der Produkte wurde nach DIN 53453 an bei 250°C gespritzten Normkleinstäben bei 23°C gemessen. Die Schlagzähigkeiten der Versuche und Beispiele sind in der Tabelle zusammengefasst.

3. Die multiaxiale Schlagbeanspruchung wurde mit Hilfe des Plastechontestes nach DIN 53443 an bei 250°C gespritzten Rundscheiben bei 23°C bestimmt.

4. Die Molgewichtsbestimmung der Polycarbonate erfolgt aufgrund der Messung der relativen Viskosität in 0,5%iger Methylenchloridlösung bei 23°C.

5. Die Wärmeformbeständigkeit nach Vicat wurde gemäss DIN 53460 bestimmt.

6. Die Flammschutzprüfung erfolgt im vertikalen Brandtest nach den Vorschriften der Underwriter Laboratories zwecks Einordnung in eine der Brandklassen UL94 VO, 94 VI oder 94 V2.

Die Einstufung eines flammgeschützten Thermoplasten in die Brandklasse UL94 VO erfolgt, wenn folgende Kriterien erfüllt sind: Bei einem Satz von 5 Proben der Abmessungen 127 × 12,7 × 3,16 mm dürfen alle Proben nach zweimaliger Beflammung von 10 sek. Zeitdauer mit einer offenen Flamme (Höhe 19 mm) nicht länger als 10 sek. nachbrennen. Die Summe der Nachbrennzeiten bei 10 Beflammungen von 5 Proben darf nicht grösser sein als 50 sek. Es darf kein brennendes Abtropfen, vollständiges Abbrennen oder ein Nachglühen von länger als 30 sek. erfolgen. Die Einstufung in die Brandklasse UL94 VI erfordert, dass die Nachbrennzeiten nicht länger als 30 sek. sind und dass die Summe der Nachbrennzeiten von 10 Beflammungen von 5 Proben nicht grösser als 250 sek. ist. Das Nachglühen darf nie länger als 60 sek. dauern. Die übrigen Kriterien sind identisch mit den oben erwähnten. Eine Einstufung in die Brandklasse UL94 V2 erfolgt dann, wenn es bei Erfüllung der übrigen Kriterien zur Einstufung UL94 V1 zu brennendem Abtropfen kommt.

Zur Durchführung der in den Beispielen beschriebenen Versuche und von Vergleichsversuchen wurden die nachfolgend beschriebenen Produkte hergestellt.

1. Herstellung eines Elastomeren $b_1$

16 Teile Butylacrylat und 0,4 Teile Tricyclodecenylacrylat wurden in 150 Teilen Wasser unter Zusatz von 0,5 Teilen des Natriumsalzes einer $C_{12}$- bis $C_{18}$-Paraffinsulfonsäure, 0,3 Teilen Kaliumpersulfat, 0,3 Teilen Natriumhydrogencarbonat und 0,15 Teilen Natriumpyrophosphat unter Rühren auf 60°C erwärmt. 10 Minuten nach dem Anspringen der Polymerisationsreaktion wurden innerhalb von 3 Stunden eine Mischung aus 82 Teilen Butylacrylat und 1,6 Teilen Tricyclodecenylacrylat zugegeben. Nach Beendigung der Monomerzugabe wurde noch eine Stunde nachreagieren gelassen. Der erhaltene Latex des vernetzten Butylacrylat-Polymerisats hatte einen Feststoffgehalt von 40 Gew.%. Dieser Latex wurde als Saat für die nachfolgende Polymerisation benutzt.

Zu einer Vorlage aus 2,5 Teilen des hergestellten Latex wurden nach Zugabe von 100 Teilen Wasser und 0,2 Teilen Kaliumpersulfat im Verlauf von 3 Stunden einerseits eine Mischung aus 98 Teilen Butylacrylat und 2 Teilen Tricyclodecenylacrylat und andererseits eine Lösung von 0,5 Teilen des Natriumsalzes einer $C_{12}$-bis $C_{18}$-Paraffinsulfonsäure in 50 Teilen Wasser bei 60°C zulaufen gelassen. Nach Zulaufende wurde 2 Stunden nachpolymerisiert. Der erhaltene Latex des vernetzten Butylacrylat-Polymerisats hatte einen Feststoffgehalt von 40%. Die mittlere Teilchengrösse (Gewichtsmittel) des Latex wurde zu 465 nm ermittelt. Die Teilchengrössenverteilung war eng ($Q = 0,2$).

2. Herstellung eines Pfropfkautschuks, Komponente $b_1 + b_2$ mit 3stufiger Pfropfhülle

125 Teile des erhaltenen Polybutylacrylat-Latex wurden mit 10 Teilen Styrol und 60 Teilen Wasser gemischt und unter Rühren nach Zusatz von weiteren 0,03 Teilen Kaliumpersulfat und 0,05 Teilen Laroylperoxid 1 Stunde auf 65°C erhitzt, wonach praktisch das gesamte Styrol verbraucht war. Nach Beendigung der ersten Stufe der Pfropfmischpolymerisation hatte das Pfropfmischpolymerisat einen Pfropfgrad von 17. Diese Pfropfmischpolymerisat-Dispersion wurde ohne weitere Zusatzstoffe mit 20 Teilen einer Mischung aus Styrol und Acrylnitril (Verhältnis 75:25) weitere 2 Stunden bis praktisch alle Monomeren verbraucht waren, polymerisiert. Der Pfropfgrad des Pfropfmischpolymerisats betrug danach 37. Schliesslich wurden 20 Teile Methylmethacrylat hinzugefügt und 2 Stunden bis zur vollständigen Umsetzung der Monomeren bei den genannten Bedingungen polymerisiert, wobei in der 3. Verfahrensstufe ein Pfropfgrad von 50 resultierte. Das Verhältnis $b_1/b_2$ für die Komponente B, bezogen auf alle 3 Verfahrensstufen war 1/1. Das erhaltene Pfropfmischpolymerisat wurde mittels Calciumchloridlösung bei 95°C aus der Dispersion gefällt, mit Wasser gewaschen und im warmen Luftstrom getrocknet. Die mittlere Teilchengrösse (Gewichtsmittel) wurde zu 485 nm ermittelt. Die Teilchengrössenverteilung war eng (Quotient $Q = 0,29$).

3. Herstellung eines Pfropfmischpolymerisates mit 2stufiger Hülle (Vergleichsversuch)

150 Teile des erhaltenen Polybutylacrylat-Latex wurden mit 20 Teilen Styrol und 60 Teilen Wasser gemischt und unter Rühren nach Zusatz von weiteren 0,03 Teilen Kaliumpersulfat und 0,05 Teilen Lauroylperoxid 3 Stunden auf 65°C erhitzt. Nach Beendigung der ersten Stufe der Pfropfmischpolymerisation hatte das Pfropfmischpolymerisat einen Pfropfgrad von 25. Diese Pfropfmischpolymerisat-Dispersion wurde ohne weitere Zusatzstoffe mit 20 Teilen einer Mischung aus Styrol und Acrylnitril (Verhältnis 75:25) weitere 3 Stunden polymerisiert. Nach Beendigung der Pfropfmischpolymerisation wurde das Produkt mittels Calciumchloridlösung bei 95°C aus der Dispersion gefällt, mit Wasser gewaschen und im warmen Luftstrom getrocknet. Der Pfropfgrad des Pfropfmischpolymerisats betrug 35.

4. Als Komponente A) wurde ein Polycarbonat auf der Basis von 2,2-Bis-(4-hydroxyphenyl)propan mit einer relativen Viskosität von 1,30 [ml/g] gemessen an einer 0,5%igen Lösung in Methylenchlorid) eingesetzt.

5. Als Komponente C) wurde eingesetzt:
DE 79® von Great Lakes,
Firemaster PO 64 P® von Great Lakes,
Maktheshim F 2400® von Maktheshim, Firemaster FF 680® von Great Lakes und
Saytex BT 93® von Saytech;

6. Als Komponente D wurde verwendet: $Sb_2O_3$.

7. Als Zusatzstoffe fanden Verwendung:
Pluriol PE 3100 = $E_1$ und
Tris(nonylphenyl)phosphit = $E_2$.

Die Erfindung wird durch die nachfolgenden Beispiele und Vergleichsversuche näher erläutert. Die in den Beispielen und Vergleichsversuchen genannten Teile und Prozente beziehen sich, sofern nicht anders angegeben, auf das Gewicht.

Beispiele 1 bis 15 und Vergleichsversuche A bis O

Die in der Tabelle angegebenen Teile der Komponenten A), B), C) und D) werden auf einem Mischextruder bei 260°C aufgeschmolzen, gemischt und anschliessend granuliert. Danach werden, jeweils bezogen auf 100 Teile Granulat, 2 Teile eines üblichen Schmiermittels [(Komponente $E_1$)] und 0,2 Teile eines üblichen Antioxidans [(Komponente $E_2$)] zugegeben, die Komponenten gemischt und schonend konfektioniert.

Aus den Mischungen wurden bei 250°C mittels einer Spritzgussmaschine Prüfkörper hergestellt, an denen die in der Tabelle genannten Prüfungen durchgeführt wurden.

Tabelle

| Beispiel | Zusammensetzung in Gew.-Teilen Komponenten | | | | | | | | | Einstufung nach UL 94 | | Kerb-schlag-zähig-keit | Plaste-chontest | Wärme formbe-ständig-keit |
| | A | B | Aufbau von B | | | | C | | | 1/8″ | 1/16″ | | | |
| | | | $b_1$ | $b_2a_1$ | $b_2a_2$ | $b_2a_3$ | Art | Teile | $Sb_2O_3$ | | | $(kJ/m^2)$ | $(N/m)$ | $(°C)$ |
|---|---|---|---|---|---|---|---|---|---|---|---|---|---|---|
| 1 | 60 | 40 | 60 | 10 | 20 | 10 | DE 79® | 9 | 3,5 | V2 | V2 | 13 | 27 | 120 |
| 2 | 60 | 40 | 60 | 12 | 20 | 10 | F 2400® | 14 | 5 | V0 | V2 | 10 | 28 | 125 |
| 3 | 60 | 40 | 60 | 3,3 | 6,7 | 30 | PO 64 P® | 14,5 | 5,1 | V0 | V1 | 14 | 26 | 123 |
| 4 | 60 | 40 | 60 | 3,3 | 6,7 | 30 | F 2400® | 15,4 | 5,7 | V0 | V1 | 21 | 30,1 | 124 |
| 5 | 60 | 40 | 60 | 3,3 | 6,7 | 30 | FF 680® | 10 | 4 | V1 | V2 | 29 | 35 | 115 |
| 6 | 60 | 40 | 60 | 3,3 | 6,7 | 30 | Saytex BT93® | 9,3 | 4,1 | V1 | V2 | 9,5 | 29 | 122 |
| 7 | 60 | 40 | 60 | 3,3 | 6,7 | 30 | DE 79® | 10 | 4,3 | V1 | V1 | 14 | 24 | 119 |
| 8 | 60 | 40 | 50 | 10 | 20 | 20 | F 2400® | 15 | 5 | V0 | V1 | 22 | 32 | 123 |
| 9 | 60 | 40 | 50 | 10 | 20 | 20 | F 2400® | 19 | 8 | V0 | V0 | 18 | 25 | 124 |
| 10 | 80 | 20 | 60 | 3,3 | 6,7 | 30 | DE 79® | 4,6 | 1,3 | V0 | V1 | 25 | 30 | 124 |
| 11 | 80 | 20 | 60 | 3,3 | 6,7 | 30 | FF 680® | 5,5 | 1,8 | V0 | V0 | 42 | 43 | 125 |
| 12 | 80 | 20 | 60 | 10 | 20 | 10 | F 2400® | 5,5 | 1,8 | V0 | V1 | 47 | 50 | 133 |
| 13 | 80 | 20 | 60 | 10 | 20 | 10 | F 2400® | 6 | 3,1 | V0 | V0 | 46 | 49 | 130 |
| 14 | 80 | 20 | 50 | 10 | 20 | 20 | PO 64 P® | 5,2 | 1,6 | V0 | V1 | 39 | 41 | 134 |
| 15 | 80 | 20 | 50 | 10 | 20 | 20 | PO 64 P® | 5,8 | 1,9 | V0 | V0 | 37 | 39 | 131 |

Tabelle (Fortsetzung)

| Vgl. Vers. | Zusammensetzung in Gew.-Teilen Komponenten | | | | | | C | | | Einstufung nach UL 94 | | Kerb-schlag-zähig-keit | Plaste-chontest | Wärme-formbe-ständig-keit |
|---|---|---|---|---|---|---|---|---|---|---|---|---|---|---|
| | A | B | $b_1$ | $b_2a_1$ | $b_2a_2$ | $b_2a_3$ | Art | Teile | $Sb_2O_3$ | 1/8″ | 1/16″ | (kJ/m²) | (N/m) | (°C) |
| A | 60 | 40 | 60 | 10 | 20 | 10 | 0 | | 0 | keine | keine | 39 | 36 | 126 |
| B | 60 | 40 | 60 | 3,3 | 6,7 | 30 | 0 | | 0 | keine | keine | 45 | 39 | 124 |
| C | 80 | 20 | 50 | 10 | 20 | 20 | 0 | | 0 | keine | keine | 53 | 47 | 130 |
| D | 60 | 40 | 100 | – | – | – | 0 | | 0 | keine | keine | 20 | 6 | 118 |
| E | 60 | 40 | 60 | 20 | 20 | – | 0 | | 0 | keine | keine | 25 | 13 | 119 |
| F | 60 | 40 | 100 | – | – | – | DE 79® | 15 | 5,2 | V2 | V2 | 1,9 | 0,75 | 110 |
| G | 60 | 40 | 100 | – | – | – | Saytex BT93® | 19 | 8 | V0 | V0 | 0,9 | 0,5 | 109 |
| H | 60 | 40 | 100 | – | – | – | F 2400® | 19 | 8 | V0 | V0 | 1,4 | 0,92 | 115 |
| I | 60 | 40 | 100 | – | – | – | PO 64 P® | 17,5 | 7,8 | V0 | V1 | 0,25 | 0,2 | 110 |
| J | 60 | 40 | 100 | – | – | – | FF 680® | 19,5 | 8,2 | V2 | V2 | 18 | 4,3 | 89 |
| K | 60 | 40 | 60 | 20 | 20 | – | DE 79® | 16 | 6 | V2 | V2 | 2,3 | 1,8 | 108 |
| L | 60 | 40 | 60 | 20 | 20 | – | Saytex BT93® | 17,5 | 7 | V0 | V1 | 1,4 | 2,5 | 106 |
| M | 60 | 40 | 60 | 20 | 20 | – | F 2400® | 19 | 8 | V0 | V0 | 2,7 | 3,4 | 112 |
| N | 60 | 40 | 60 | 20 | 20 | – | PO 64 P® | 19 | 8 | V0 | V0 | 2,6 | 2,1 | 109 |
| O | 60 | 40 | 60 | 20 | 20 | – | FF 680® | 19,5 | 8,3 | V2 | V2 | 23 | 11 | 90 |

EP 0 177 875 B1

## Patentansprüche

1. Selbstverlöschende thermoplastische Formmasse, enthaltend

A) 10 bis 90 Gew.-Teile, mindestens eines Polycarbonates und

B) 90 bis 10 Gew.-Teile, mindestens eines Pfropfmischpolymerisates, das gebildet wird aus

$b_1$) mindestens einem Elastomeren (Kautschuk), das 10 bis 80 Gew.%, bezogen auf B), ausmacht und das aufgebaut ist aus

$b_1a_1$) 50 bis 99,9 Gew.%, bezogen auf $b_1$), mindestens eines Alkylacrylats mit 1 bis 8 Kohlenstoffatomen im Alkylrest

$b_1a_2$) 0 bis 50 Gew.%, bezogen auf $b_1$), mindestens eines copolymerisierbaren ungesättigten Monomeren und

$b_1a_3$) 0,1 bis 5 Gew.%, bezogen auf $b_1$), eines copolymerisierbaren polyfunktionellen, vernetzenden Monomeren und

$b_2$) einer 3stufig aufgebauten Pfropfhülle auf dieses Elastomere, die 90 bis 20 Gew.%, bezogen auf B), ausmacht, und die einpolymerisiert enthält als Pfropfmonomere der ersten Stufe

$b_2a_1$) 5 bis 40 Gew.%, bezogen auf $b_2$), mindestens eines monoethylenisch ungesättigten aromatischen Kohlenwasserstoffs mit bis zu 12 Kohlenstoffatomen, als Pfropfmonomere der zweiten Stufe

$b_2a_2$) 15 bis 50 Gew.%, bezogen auf $b_2$), eines Gemisches aus mindestens einem monoethylenisch ungesättigten aromatischen Kohlenwasserstoff mit bis zu 12 Kohlenstoffatomen und – mindestens einem damit copolymerisierbaren ethylenisch ungesättigten Monomeren im Gewichtsverhältnis von 90:10 bis 60:40, und als Pfropfmonomere der dritten Stufe

$b_2a_3$) 10 bis 85 Gew.%, bezogen auf $b_2$), eines Alkylmethacrylates oder eines Alkylacrylates mit 1 bis 8 C-Atomen im Alkylrest oder deren Mischungen, wobei das aus dem Elastomeren $b_1$) und der Pfropfhülle $b_2$) gebildete Pfropfmischpolymerisat eine mittlere Teilchengrösse von 200 bis 700 nm ($d_{50}$-Wert der integralen Masseverteilung aufweist.

Enthaltend ferner

C) mindestens ein Flammschutzmittel wobei die Formmasse, jeweils bezogen auf 100 Gew.-Teile A+B, 1 bis 50 Gew.-Teile einer Halogen enthaltenden organischen Verbindung als Flammschutzmittel (Komponente C) und

D) 0,1 bis 20 Gew.-Teile einer Metall oder Nichtmetall enthaltenden Verbindung (Synergist) aufweist.

2. Formmasse nach Anspruch 1, bestehend aus den Komponenten A, B, C und D.

3. Formmasse nach Anspruch 1, wobei diese übliche Zusatzstoffe in üblichen Mengen enthält.

4. Selbstverlöschende thermoplastische Formmasse, bestehend aus

A) 10 bis 90 Gew.%, mindestens eines Polycarbonates und

B) 90 bis 10 Gew.%, mindestens eines Pfropfmischpolymerisates, das seinerseits besteht aus

$b_1$) mindestens einem Elastomeren (Kautschuk), das 10 bis 80 Gew.%, bezogen auf B), ausmacht und

$b_2$) einer Pfropfhülle auf dieses Elastomere, die 90 bis 20 Gew.%, bezogen auf B), ausmacht,

wobei das Elastomere $b_1$) erhältlich ist durch Polymerisation eines Gemisches der Monomeren $b_1a_1$), $b_1a_2$) und $b_1a_3$), so dass dieses einpolymerisiert enthält: [(Summe der Monomeren $b_1a_1$) bis $b_1a_3$) = 100)]

$b_1a_1$) 50 bis 99,9 Gew.%, bezogen auf $b_1$), mindestens eines Alkylacrylats mit 1 bis 8 Kohlenstoffatomen im Alkylrest

$b_1a_2$) 0 bis 50 Gew.% bezogen auf $b_1$), mindestens eines weiteren copolymerisierbaren ungesättigten Monomeren und

$b_1a_3$) 0,1 bis 5 Gew.%, bezogen auf $b_1$), eines copolymerisierbaren polyfunktionellen, vernetzenden Monomeren im ersten Verfahrensschritt

$b_2a_1$) 5 bis 40 Gew.%, bezogen auf $b_2$), mindestens eines monoethylenisch ungesättigten aromatischen Kohlenwasserstoffs mit bis zu 12 Kohlenstoffatomen im zweiten Verfahrensschritt

$b_2a_2$) 15 bis 50 Gew.%, bezogen auf $b_2$), eines Gemisches aus mindestens einem monoethylenisch ungesättigten aromatischen Kohlenwasserstoff mit bis zu 12 Kohlenstoffatomen und mindestens einem damit copolymerisierbaren ethylenisch ungesättigten Monomeren im Gewichtsverhältnis von 90:10 bis 60:40, und im dritten Verfahrensschritt

$b_2a_3$) 10 bis 85 Gew.%, bezogen auf $b_2$), eines Alkylmethacrylates oder eines Alkylacrylates mit 1 bis 8 C-Atomen im Alkylrest oder Mischungen der genannten Monomeren, und wobei das aus dem Elastomeren $b_1$) und der Pfropfhülle $b_2$) gebildete Pfropfmischpolymerisat eine mittlere Teilchengrösse von 200 bis 700 nm ($d_{50}$-Wert der integralen Masseverteilung) aufweist, bestehend ferner aus

C) mindestens einem Flammschutzmittel und einer weiteren Komponente wobei die Formmasse, jeweils bezogen auf 100 Gew.-Teile A+B, 1 bis 50 Gew.-Teile einer Halogen enthaltenden organischen Verbindung als Flammschutzmittel (Komponente C) und

D) 0,1 bis 20 Gew.-Teile einer Metall oder Nichtmetall enthaltenden Verbindung (Synergist) aufweist.

5. Thermoplastische Formmasse, bestehend aus

A) 10 bis 90 Gew.%, mindestens eines Polycarbonates und

B) 90 bis 10 Gew.%, mindestens eines Pfropfmischpolymerisates, das seinerseits besteht aus

$b_1$) mindestens einem Elastomeren (Kautschuk), das 30 bis 70 Gew.%, bezogen auf B), ausmacht und

$b_2$) einer Pfropfhülle auf dieses Elastomere, die 70 bis 30 Gew.%, bezogen auf B), ausmacht,

wobei das Elastomere $b_1$) erhältlich ist durch Polymerisation eines Gemisches der Monomeren $b_1a_1$), $b_1a_2$) und $b_1a_3$), so dass dieses einpolymerisiert enthält: [(Summe der Monomeren $b_1a_1$) bis $b_1a_3$) = 100)]

$b_1a_1$) 95 bis 99,9 Gew.%, bezogen auf $b_1$), minde-

stens eines Alkylacrylats mit 1 bis 8 Kohlenstoffatomen im Alkylrest

$b_1a_2$) 0 bis 50 Gew.%, bezogen auf $b_1$), mindestens eines copolymerisierbaren ungesättigten Monomeren und

$b_1a_3$) 0,1 bis 5 Gew.%, bezogen auf $b_1$), eines copolymerisierbaren polyfunktionellen, vernetzenden Monomeren,

wobei die Pfropfhülle $b_2$) erhalten wird durch sukzessive Polymerisation von Monomeren der Sorten $b_2a_1$), $b_2a_2$) und $b_2a_3$ in drei Verfahrensschritten in der genannten Reihenfolge in Gegenwart des Elastomeren $b_1$), so dass an- und somit einpolymerisiert werden im ersten Verfahrensschritt

$b_2a_1$) 10 bis 25 Gew.%, bezogen auf $b_2$), mindestens eines monoethylenisch ungesättigten aromatischen Kohlenwasserstoffs mit bis zu 12 Kohlenstoffatomen, im zweiten Verfahrensschritt

$b_2a_2$) 20 bis 45 Gew.%, bezogen auf $b_2$), eines Gemisches aus mindestens einem monoethylenisch ungesättigten aromatischen Kohlenwasserstoff mit bis zu 12 Kohlenstoffatomen und mindestens einem damit copolymerisierbaren ethylenisch ungesättigten Monomeren im Gewichtsverhältnis von 90:10 bis 60:40, und im dritten Verfahrensschritt

$b_2a_3$) 25 bis 70 Gew.%, bezogen auf $b_2$), eines Alkylmethacrylates oder eines Alkylacrylates mit 1 bis 8 C-Atomen im Alkylrest oder Mischungen der genannten Monomeren, und wobei das aus dem Elastomeren $b_1$) und der Pfropfhülle $b_2$) gebildete Pfropfmischpolymerisat eine mittlere Teilchengrösse von 200 bis 700 nm ($d_{50}$-Wert der integralen Masseverteilung aufweist, bestehend ferner,aus

C) mindestens einem Flammschutzmittel und einer weiteren Komponente,

wobei die Formmasse, jeweils bezogen auf 100 Gew.-Teile A+B, 1 bis 50 Gew.-Teile einer Halogen enthaltenden organischen Verbindung als Flammschutzmittel (Komponente C) und

D) 0,1 bis 20 Gew.-Teile einer Metall oder Nichtmetall enthaltenden Verbindung (Synergist) aufweist.

6. Verwendung der Formmassen gemäss Anspruch 1 zur Herstellung von Formteilen.

7. Formteile aus Formmassen gemäss Anspruch 1.

**Claims**

1. A self-extinguishing thermoplastic molding material containing

A) from 10 to 90 parts by weight of one or more polycarbonates and

B) from 90 to 10 parts by weight of one or more graft copolymers which are formed from

$b_1$) one more elastomers (rubbers) which account for from 10 to 80% by weight of B), and which are composed of

$b_1a_1$) from 50 to 99.9% by weight, based on $b_1$), of one or more alkyl acrylates where alkyl is of 1 to 8 carbon atoms,

$b_1a_2$) from 0 to 50% by weight, based on $b_1$), of

one or more copolymerizable unsaturated monomers and

$b_1a_3$)from 0.1 to 5% by weight, based on $b_1$), of a copolymerizable polyfunctional, crosslinking monomer and

$b_2$) a graft shell, built up in three stages, on this elastomer, which graft shell accounts for from 90 to 20% by weight, based on B), and which contains, as copolymerized graft monomers of the first stage,

$b_1a_1$) from 5 to 40% by weight, based on $b_2$), of one or more monoethylenically unsaturated aromatic hydrocarbons of not more than 12 carbon atoms, as copolymerized graft monomers of the second stage,

$b_2a_2$) from 15 to 50% by weight, based on $b_2$), of a mixture of one or more monoethylenically unsaturated aromatic hydrocarbrons of not more than 12 carbon atoms and one or more ethylenically unsaturated monomers which are copolymerizable with the said hyrocarbons, in a weight ratio of from 90:10 to 60:40, and as copolymerized graft monomers of the third stage,

$b_2a_3$) from 10 to 85% by weight, based on $b_2$), of an alkyl methacrylate or of an alkyl acrylate where alkyl is of 1 to 8 carbon atoms, or a mixture of these, the graft copolymer formed from the elastomer $b_1$) and the graft shell $b_2$) having a mean particle size of from 200 to 700 nm ($d_{50}$ value of the integral mass distribution), and furthermore containing

C) one or more flameproofing agents, wherein the molding material contains, based in each case on 100 parts by weight of A+B, from 1 to 50 parts by weight of a halogen atom-containing organic compound as the flameproofing agent (component C) and

D) from 0.1 to 20 parts by weight of a compound containing a metal or nonmetal (synergistic agent).

2. A molding material as claimed in claim 1, consisting of the components A, B, C and D.

3. A molding material as claimed in claim 1, which contains conventional additives in the usual amounts.

4. A self-extinguishing thermoplastic molding material consisting of

A) from 10 to 90% by weight of one or more polycarbonates and

B) from 90 to 10% by weight of one or more graft copolymers which in turn consist of

$b_1$) one or more elastomers (rubbers) which account for from 10 to 80% by weight, based on B), and

$b_2$) a graft shell on this elastomer, which shell accounts for from 90 to 20% by weight, based on B), the elastomer $b_1$) being obtainable by polymerization of a mixture of monomers $b_1a_1$), $b_1a_2$) and $b_1a_3$), so that this elastomer contains as copolymerized units [sum of the monomers $b_1a_1$) to $b_1a_3$) = 100]:

$b_1a_1$) from 50 to 99.9% by weight, based on $b_1$), of one or more alkyl acrylates where alkyl is of 1 to 8 carbon atoms,

$b_aa_2$) from 0 to 50% by weight, based on $b_1$),of

one or more further copolymerizable unsaturated monomers and

b₁a₃) from 0.1 to 5% by weight, based on b₁), of a copolymerizable polyfunctional, crosslinking monomer, in the first process step,

b₂a₁) from 5 to 40% by weight, based on b₂), of one or more monoethylenically unsaturated aromatic hydrocarbons of not more than 12 carbon atoms, in the second process step,

b₂a₂) from 15 to 50% of weight, based on b₂), of a mixture of one or more monoethylenically unsaturated aromatic hydrocarbons of not more than 12 carbon atoms and one or more ethylenically unsaturated monomers which are copolymerizable with the said hydrocarbons, in a weight ratio of from 90:10 to 60:40, and in the third process step,

b₂a₃) from 10 to 85% by weight, based on b₂), of an alkyl methacrylate or of an alkyl acrylate where alkyl is of 1 to 8 carbon atoms, or a mixture of the stated monomers, and the graft copolymer formed from the elastomer b₁) and the graft shell b₂) having a mean particle size of from 200 to 700 nm (d₅₀ value of the integral mass distribution), and furthermore consisting of

C) one or more flameproofing agents and a further component, wherein the molding material contains, based in each case on 100 parts by weight of A+B, from 1 to 50 parts by weight of a halogen atom-containing organic compound as the flameproofing agent (component C) and

D) from 0.1 to 20 parts by weight of a compound containing a metal or nonmetal (synergistic agent).

5. A thermoplastic molding material consisting of

A) from 10 to 90% by weight of one or more polycarbonates and

B) from 90 to 10% by weight of one or more graft copolymers which in turn consist of

B₁) one or more elastomers (rubbers) which account for from 30 to 70% by weight, based on B), and

b₂) a graft shell on this elastomer which accounts for from 70 to 30% by weight, based on B), the elastomer b₁) being obtainable by polymerization of a mixture of monomers b₁a₁), b₁a₂ and (b₁a₃), so that this elastomer contains as copolymerized units [sum of the monomers b₁a₁) to b₁a₃) = 100]:

b₁a₁) from 95 to 99.9% by weight, based on b₁), of one or more alkyl acrylates where alkyl is of 1 to 8 carbon atoms,

b₁a₂) from 0 to 50% by weight, based on b₁), of one or more copolymerizable unsaturated monomers and

b₁a₃) from 0.1 to 5% by weight, based on b₁), of a copolymerizable polyfunctional, crosslinking monomer, the graft shell b₂) being obtained by successive polymerization of monomers of the types b₂a₁), b₂a₂)and b₂a₃) in three process steps in the stated sequence in the presence of the elastomer b₁) so that, in the first process step, b₂a₁) from 10 to 25% by weight, based on b₂), of one or more monoethylenically unsaturated aromatic hydrocarbons of not more than 12 carbon atoms, in the second process step,

b₂a₂ from 20 to 45% of weight, based on b₂), of a mixture of one or more monoethylenically unsaturated aromatic hydrocarbons of not more than 12 carbon atoms and one or more ethylenically unsaturated monomers which are copolymerizable with the said hydrocarbons, in a weight ratio of from 90:10 to 60:40, and in the third process step,

b₂a₃) from 25 to 70% by weight, based on b₂), of an alkyl methacrylate or an alkyl acrylate where alkyl is of 1 to 8 carbon atoms, or a mixture of the stated monomers, are prepolymerized and hence copolymerized, and the graft copolymer formed from the elastomer b₁) and the graft shell b₂) having a mean particle size of from 200 to 700 nm (d₅₀ value of the integral mass distribution), and furthermore consisting of

C) one or more flameproofing agents and a further component, wherein the molding material contains, based in each case on 100 parts by weight of A+B, from 1 to 50 parts by weight of a halogen atom-containing organic compound as the flameproofing agent (component C) and

D) from 0.1 to 20 parts by weight of a compound containing a metal or nonmetal (synergistic agent).

6. Use of the molding material as claimed in claim 1 for the production of moldings.

7. A molding obtained from a molding material as claimed in claim 1.

**Revendications**

1. Matière à mouler thermoplastique, auto-extinguible, contenant

A) 10 à 90 parties en poids d'au moins un polycarbonate et

B) 90 à 10 parties en poids d'au moins un copolymère de greffage, qui se compose

b₁) d'au moins un élastomère (caoutchouc) qui constitue de 10 à 80% en poids par rapport à B) et qui est constitué de

b₁a₁) 50 à 99% en poids, par rapport à b₁), d'au moins un acrylate d'alkyle dont le radical alkyle comporte de 1 à 8 atomes de carbone,

b₁a₂) 0 à 50% en poids, par rapport à b₁), d'au moins un monomère insaturé, copolymérisable et

b₁a₃) 0,1 à 5% en poids, par rapport à b₁), d'un monomère réticulant, polyfonctionnel, copolymérisable et

b₂) une gaine ou enveloppe de greffage obtenue en trois étapes, sur cet élastomère, qui constitue de 90 à 20% en poids, par rapport à B), et qui contient, en incorporation polymère, à titre de monomères de greffage de la première étape

b₂a₁) 5 à 40% en poids, par rapport à b₂), d'au moins un hydrocarbure aromatique, monoéthyléniquement insaturé, qui comporte jusqu'à 12 atomes de carbone, à titre de monomères de greffage de la seconde étape

b₂a₂) 15 à 50% en poids, par rapport à b₂) d'un mélange d'au moins un hydrocarbure aromatique, monoéthyléniquement insaturé, comportant jusqu'à 12 atomes de carbone et d'au moins un monomère éthyléniquement insaturé, copolymérisable avec celui-ci, dans le rapport pondéral de 90:10 à 60:40, et, à titre de monomères de greffage de la troisième étape

$b_2a_3$) 10 à 85% en poids, par rapport à $b_2$) d'un méthacrylate d'alkyle ou d'un acrylate d'alkyle, dont le radical alkyle comporte de 1 à 8 atomes de carbone, ou de leurs mélanges, où le copolymère de greffage formé à partir de l'élastomère $b_1$) et de l'enveloppe ou gaine de greffage $b_2$), présente un calibre moyen des particules de 200 à 700 nm (valeur $d_{50}$ de la répartition massique intégrale), contenant, de surcroît,

C) au moins un agent ignifugeant où la matière à mouler présente, chaque fois rapportés à 100 parties en poids de A+B, 1 à 50 parties en poids d'un composé organique halogéné à titre d'agent ignifugeant (composant C) et

D) 0,1 à 20 parties en poids d'un composé contenant un métal ou un métalloïde (agent de potentialisation).

2. Matière à mouler suivant la revendication 1, qui se compose des composants A, B, C et D.

3. Matière à mouler suivant la revendication 1, qui contient ces additifs usuels en proportions habituelles.

4. Matière à mouler thermoplastique, autoextinguible, se composant de

A) 10 à 90% en poids d'au moins un polycarbonate et

B) 90 à 10% en poids d'au moins un copolymère de greffage, qui, de son côté, se compose de

$b_1$) au moins un élastomère (caoutchouc) qui constitue de 10 à 80% en poids, par rapport à B) et

$b_2$) une gaine ou enveloppe de greffage sur cet élastomère, qui constitue de 90 à 20% en poids, par rapport à B), où l'élastomère $b_1$) peut s'obtenir par la polymérisation d'un mélange des monomères $b_1a_1$), $b_1a_2$) et $b_1a_3$), en sorte que celui-ci contient, incorporés par polymérisation: [somme des monomères $b_1a_1$) à $b_1a_3$) = 100]

$b_1a_1$) 50 à 99,9% en poids, par rapport à $b_1$), d'au moins un acrylate d'alkyle dont le radical alkyle contient de 1 à 8 atomes de carbone,

$b_1a_2$) 0 à 50% en poids, par rapport à $b_1$), d'au moins un monomère insaturé, copolymérisable, supplémentaire et

$b_1a_3$) 0,1 à 5% en poids, par rapport à $b_1$), d'un monomère réticulant, polyfonctionnel, copolymérisable, présentant dans un premier stade, étage ou étape opératoire

$b_2a_1$) 5 à 40% en poids, par rapport à $b_2$), d'au moins un hydrocarbure aromatique, monoéthyléniquement insaturé, comportant jusqu'à 12 atomes de carbone, dans un second stade, étage ou étape opératoire

$b_2a_2$) 15 à 50% en poids, par rapport à $b_2$), d'un mélange d'au moins un hydrocarbure aromatique, monoéthyléniquement insaturé, comportant jusqu'à 12 atomes de carbone, et d'au moins un monomère éthyléniquement insaturé, copolymérisable avec celui-ci, dans le rapport pondéral de 90:10 à 60:40, et, dans un troisième stade, étage ou étape opératoire

$b_2a_3$) 10 à 85% en poids, par rapport à $b_2$) d'un méthacrylate d'alkyle ou d'un acrylate d'alkyle, dont le radical alkyle comporte de 1 à 8 atomes de carbone, ou de mélanges des monomères précités, et où le copolymère de greffage formé à partir de l'élastomère $b_1$) et de la gaine ou enveloppe de greffage $b_2$) présente un calibre moyen des particules de 200 à 700 nm (valeur $d_{50}$ de la répartition massique intégrale), se composant d'autre part de

C) au moins un agent ignifugeant et au moins un composant supplémentaire, où la matière à mouler présente, rapportées chaque fois à 100 parties en poids de A+B, 1 à 50 parties en poids d'un composé organique halogéné à titre d'agent ignifugeant (composant C) et

D) 0,1 à 20 parties en poids d'un composé contenant un métal ou un métalloïde (de potentialisation).

5. Matière à mouler thermoplastique, se composant de

A) 10 à 90% en poids d'au moins un polycarbonate et

B) 90 à 10% en poids d'au moins un copolymère de greffage, qui, de son côté, se compose de

$b_1$) au moins un élastomère (caoutchouc), qui constitue de 30 à 70% en poids par rapport à B) et

$b_2$) une gaine ou enveloppe de greffage sur cet élastomère, qui constitue de 70 à 30% en poids, par rapport à B), où l'élastomère $b_1$) peut s'obtenir par la polymérisation d'un mélange des monomères $b_1a_1$), $b_1a_2$) et $b_1a_3$), si bien que celui-ci contient, en incorporation polymère: [somme des monomères $b_1a_1$) à $b_1a_3$) = 100]

$b_1a_1$) 95 à 99,9% en poids, par rapport à $b_1$), d'au moins un acrylate d'alkyle dont le radical alkyle comporte de 1 à 8 atomes de carbone,

$b_1a_2$) 0 à 50% en poids, par rapport à $b_1$), d'au moins un monomère insaturé, copolymérisable et

$b_1a_3$) 0,1 à 5% en poids, par rapport à $b_1$), d'un monomère réticulant, polyfonctionnel, copolymérisable, où l'enveloppe ou gaine de greffage $b_2$) s'obtient par la polymérisation successive de monomères des sortes $b_2a_1$), $b_2a_2$) et $b_2a_3$) en trois étapes, stades ou étages opératoires dans la suite citée, en présence de l'élastomère $b_1$), si bien que sont polymérisés et, de ce fait, incorporés par polymérisation, dans le premier stade, étage ou étape opératoire

$b_2a_1$) 10 à 25% en poids, par rapport à $b_2$), d'au moins un hydrocarbure aromatique monoéthyléniquement insaturé, comportant jusqu'à 12 atomes de carbone, dans le second stade, étage ou étape opératoire

$b_2a_2$) 20 à 45% en poids, par rapport à $b_2$), d'un mélange d'au moins un hydrocarbure aromatique, monoéthyléniquement insaturé, comportant jusqu'à 12 atomes de carbone et d'au moins un monomère éthyléniquement insaturé, copolymérisable avec celui-ci, dans le rapport pondéral de 90:10 à 60:40, et dans le troisième stade, étage ou étape opératoire

b$_2$a$_3$) 25 à 70% en poids, par rapport à b$_2$), d'un méthacrylate d'alkyle ou d'un acrylate d'alkyle, dont le radical alkyle comporte de 1 à 8 atomes de carbone, ou de mélanges des monomères précités, et où le copolymère de greffage formé à partir de l'élastomère b$_1$) et de l'enveloppe ou gaine de greffage b$_2$), présente un calibre moyen des particules de 200 à 700 nm (valeur d$_{50}$ de la répartition massique intégrale), se composant, en outre

C) d'au moins un agent ingifugeant et d'un composant supplémentaire, où la matière à mouler, chaque fois rapportée à 100 parties en poids de A+B, présente de 1 à 50 parties en poids d'un composé organique halogéné à titre d'agent ignifugeant (composant C) et

D) de 0,1 à 20 parties en poids d'un composé contenant un métal ou un métalloïde (de potentialisation).

6. Utilisation des matières à mouler suivant la revendication 1, pour la fabrication d'articles moulés.

7. Articles moulés obtenus au départ des matières à mouler suivant la revendication 1.